# EUROPÄISCHE PATENTSCHRIFT

(11) **EP 1 547 368 B1**
(45) Veröffentlichungstag und Bekanntmachung des Hinweises auf die Patenterteilung: **30.05.2018**
(21) Anmeldenummer: 03753401.3
(22) Anmeldetag: 10.09.2003
(51) Int. Cl.: H04N 5/374

(54) **VERFAHREN ZUM BETREIBEN EINER OPTOELEKTRONISCHEN SENSORVORRICHTUNG**
METHOD FOR OPERATING AN OPTOELECTRONIC SENSOR DEVICE
PROCEDE PERMETTANT DE FAIRE FONCTIONNER UN DISPOSITIF DETECTEUR OPTOELECTRONIQUE

(30) Priorität: 01.10.2002 DE 10245912
(43) Veröffentlichungstag der Anmeldung: 29.06.2005
(73) Patentinhaber: Bayerische Motoren Werke Aktiengesellschaft, 80809 München (DE)
(72) Erfinder: KOCH, Carsten, 21368 Dahlenburg (DE); AKISOGLU, Semih, 80637 München (DE)
(86) Internationale Anmeldenummer: PCT/EP2003/010033
(87) Internationale Veröffentlichungsnummer: WO 2004/032483

(56) Entgegenhaltungen:
- EP-A- 1 091 571
- WO-A1-99/29102
- DE-A1- 10 018 366
- US-A1- 2002 113 209
- "Shutter Operations for CCD and CMOS Image Sensors" APPLICATION NOTE MTD/PS-0259, XX, XX, 23. Oktober 2001 (2001-10-23), Seiten 1-5, XP002231864
- PATENT ABSTRACTS OF JAPAN vol. 1999, no. 03, 31. März 1999 (1999-03-31) & JP 10 336531 A (SONY CORP), 18. Dezember 1998 (1998-12-18) & US 6 614 472 B1 2. September 2003 (2003-09-02)

## Beschreibung

Die Erfindung bezieht sich auf ein Verfahren zum Betreiben einer räumlich auflösenden, optoelektronischen Sensorvorrichtung mit einer Sensorfläche, bestehend aus einer Mehrzahl lichtempfindlicher Sensorelemente, und mit einer Aufnahmeoptik, die eine räumliche Lichtverteilung in einer von ihr erfassten Umgebung auf die aktive Sensorfläche abbildet, wobei jeweils eine Teilmenge von Sensorelementen für jeweils die Dauer eines zugeordneten Aktivierungsintervalls für die Integration einfallenden Lichtes zur Erzeugung eines entsprechenden Teilbildes der Umgebung aktiviert wird, und mit einer Beleuchtungsvorrichtung, die in zeitlichem Zusammenhang mit den Aktivierungsintervallen die von der Aufnahmeoptik erfasste Umgebung wenigstens zeit- und bereichsweise mit Licht eines von den Sensorelementen integrierbaren Wellenlängenbereichs beleuchtet.

Derartige Verfahren sowie derartige optoelektronische Sensorvorrichtungen sind allgemein aus dem Bereich der digitalen Bildgebung bekannt. Die besondere Ansteuerung der Sensorelemente ist unter dem Begriff "Rolling Shutter" bekannt, wobei sich dieser Ausdruck sowohl auf das Ansteuerverfahren als auch auf eine entsprechend betriebene Sensorvorrichtung beziehen kann. Nachfolgend soll zunächst die prinzipielle Funktionsweise des Rolling Shutters beschrieben werden.

Digitale Kameras zur Aufnahme einer schnellen Folge von Bildern arbeiten oft mit einem matrixartigen Sensor mit einer Sensorfläche die aus einer Vielzahl in Reihen und Spalten angeordneter, lichtempfindlicher Sensorelemente besteht. Der Einfachheit halber wird im Rahmen dieser Beschreibung des Standes der Technik nur auf solche Sensorvorrichtungen Bezug genommen, obgleich auch andere Anordnungen der Sensorelemente möglich sind.

Eine Aufnahmeoptik bildet eine räumliche Lichtverteilung auf die Sensorfläche ab. In den einzelnen Sensorelementen, in der Regel spezielle Halbleiteranordnungen, verursachen die auftreffenden Photonen die Erzeugung isolierter Elektronen, die über die Belichtungszeit des Sensorelements in einem zugeordneten Reservoir gespeichert werden. Man spricht von der Integration des auftreffenden Lichts in den Sensorelementen. Im Anschluss an die Belichtungszeit werden die Sensorelemente ausgelesen, d.h. es wird die Anzahl der gespeicherten Elektronen in räumlicher Zuordnung zu den entsprechenden Sensorelementen als Maß für die während der Belichtungszeit eingefallenen Photonen bestimmt. Mit Hilfe einer Datenverarbeitungseinheit, die geeignete Verarbeitungsmittel, wie etwa Digitalisierungsmittel, Speichermittel, Berechnungsmittel etc. aufweist, kann so eine digitale Repräsentation der aufgenommenen Daten erzeugt werden, die allgemein als "Bild" bezeichnet wird. Die einzelnen Bildpunkte, die den Positionen der Sensorelemente in der Sensorfläche entsprechen, werden "Pixel" genannt. Die digitale Repräsentation der Gesamtheit aller benutzter Sensorelemente wird "Frame" oder "Rahmen" genannt.

Zur Realisierung einer definierten Belichtungszeit werden die Sensorelemente jeweils zurückgesetzt (Reset), was einem Leeren der Elektronenreservoirs entspricht. Die Belichtungszeit wird durch das erneute Leeren der Reservoirs im Rahmen des Auslesens beendet. Dieses gesamte Intervall wird im Rahmen dieser Anmeldung als Aktivierungsintervall bezeichnet.

Das Rolling Shutter stellt eine besondere Abfolge von Reset- und Auslesevorgängen dar, die eine besonders schnelle Bildfolge ermöglicht. Dabei erfolgt der Reset und damit der Beginn der Belichtungszeit für die betroffenen Sensorelemente jeweils zeilen- bzw. spaltenweise in einem vorgegebenen Takt, sodass nacheinander und in Übereinstimmung mit ihrer räumlichen Anordnung alle Zeilen bzw. Spalten zurückgesetzt werden. Für jede Zeile bzw. Spalte beginnt die Belichtungszeit also zu einem anderen Zeitpunkt. Mit einem gleichbleibenden Versatz von einer oder mehreren Zeilen bzw. Spalten erfolgt das Auslesen der Sensorelemente ebenfalls zeilen- bzw. spaltenweise. Die Belichtungszeit wird bei gegebener Reset- und Auslesezeit, d.h. bei gegebener Verweildauer des Vorgangs in einer Zeile bzw. Spalte, durch die Größe des Versatzes zwischen Reset und Auslesen bestimmt.

Die maximale Belichtungszeit entspricht einer Frametime, d.h. der Zeit, die für das Auslesen eines Rahmens erforderlich ist; Die minimale Belichtungszeit entspricht der Zeit, die für das Auslesen einer Zeile bzw. Spalte erforderlich ist. Solange sich die Belichtungszeit innerhalb dieser Grenzen bewegt ist die Geschwindigkeit der Bildabfolge unabhängig von der Belichtungszeit.

Da es bei einem Versatz von mehreren Spalten bzw. Zeilen zu einem Überlapp zwischen aufeinander folgenden Frames kommt, indem die letzten Zeilen bzw. Spalten des vorangehenden Frames noch nicht ausgelesen, die ersten Zeilen bzw. Spalten des nachfolgenden Frames aber bereits zurückgesetzt sind, können Bilder in kontinuierlicher Weise erzeugt werden, was zu einer sehr schnellen Bildabfolge führt.

Andererseits birgt dieser Überlapp das Problem der mangelhaften Trennung der einzelnen Frames voneinander. Bei den meisten Multimedia-Anwendungen ist dies unbeachtlich. Bei Messanordnungen jedoch, in denen unterschiedlicher Frames miteinander verglichen oder auf andere Weise miteinander verarbeitet werden müssen, kann dies zu Schwierigkeiten führen.

Aus DE 100 62 977 A1 ist beispielsweise ein Verfahren zur Überwachung des Innenraums eines Kraftfahrzeuges bekannt, bei dem aus derselben Sensorposition zwei Bilder eines Kraftfahrzeuginnenraums unter unterschiedlichen Beleuchtungsbedingungen aufgenommen und anschließend pixelweise voneinander subtrahiert werden. Die unterschiedlichen Beleuchtungsbedingungen werden durch die geeignete Ansteuerung einer Beleuchtungsquelle zur Beleuchtung des überwachten Innenraums verursacht, die während der Aufnahme eines Bildes an- und während der Aufnahme des anderen Bildes ausgeschaltet ist. Sie Subtraktion dient der Eliminierung des Hintergrundlichtes, d.h. der sog. Offset-Reduktion.

Über die spezielle Ansteuerung der Sensorvorrichtung wird in der zitierten Druckschrift keine Angabe gemacht. Besonders wünschenswert wäre es jedoch, derartige Anwendungen mit Rolling-Shutter-Sensorvorrichtungen zu realisieren, da diese die am Markt weitest verbreiteten und damit kostengünstigsten Systeme sind. Wollte man jedoch eine solche Messung unter Anwendung des herkömmlichen Rolling-Shutter-Verfahrens durchführen, könnte man nur entweder den Zeilenversatz auf eine Zeile reduzieren und die Beleuchtungsquelle mit der Frametime triggern oder einen mehrzeiligen Versatz beibehalten und zwischen einem beleuchteten und einem unbeleuchteten Frame einen Überlappungsframe verwerfen. Die Frametime der berechneten Bilder, d.h. der zeitliche Versatz zwischen den Bildern, deren Pixelwerte der Differenz der entsprechenden Pixel der aufgenommenen Originalbilder entsprechen, wird hierdurch verdoppelt bzw. sogar verdreifacht. Dies ist für viele

Aus DE 100 18 366 A1 ist ein Verfahren gemäß dem Oberbegriff von Anspruch 1 bekannt, bei dem eine Rolling-Shutter-Kamera zur Überwachung des Innenraums eines Kraftfahrzeuges eingesetzt wird. Hierbei wird eine Beleuchtungsquelle mit der Shutter-Bewegung, d. h. mit der Bewegung der Reset-bzw. Auslesezeile über die Sensorfläche getriggert, sodass sie in dem überwachten Raum Lichtpunkte zu genau der Zeit erzeugt, in dem diejenigen Sensorelemente aktiv sind, auf die diese Lichtpunkte in einem zuvor definierten Sollzustand, z. B. einem leeren Fahrzeug, abgebildet würden. Ein Bild des Sollzustandes ist zum Vergleich mit aktuell aufgenommenen Bildern gespeichert. Werden, bedingt durch eine Abweichung vom Sollzustand, z. B. Eindringen einer Person in den Raum, die erzeugten Lichtpunkte nicht auf den vorbestimmten Sensorelementen abgebildet, kann dies durch Vergleich mit dem Referenzbild ermittelt werden.

Nachteilig bei diesem Verfahren ist jedoch, dass es auf den Vergleich der aktuellen Situation mit einem vorgegebenen, statischen Sollzustand beschränkt ist. Eine Beurteilung dynamischer Vorgänge ist ausgeschlossen. Zudem nutzt das Verfahren faktisch nur einen äußerst geringen Teil der verfügbaren Sensorelemente zum In- formationsgewinn, nämlich nur diejenigen Sensorelemente, auf die die erzeugten Lichtpunkte im Sollzustand abgebildet werden. Die aus technischen Gründen not- wendige Aktivierung der übrigen Sensorelemente bringt lediglich Zeitnachteile.

Aus der WO 99/29 102 A1 ist ein gattungsgemäßes Verfahren bekannt.

Es ist die Aufgabe der vorliegenden Erfindung, ein gattungsgemäßes Verfahren derart weiterzuentwickeln, dass auch schnelle dynamische Vorgänge unter Verwendung handelsüblicher Rolling-Shutter-Sensorvorrichtungen erfasst werden können.

Diese Aufgabe wird durch die Merkmale des Anspruchs 1 gelöst.

Hierdurch wird, anschaulich gesprochen, erreicht, dass innerhalb einer Frametime n Bilder erzeugt werden, die im Wesentlichen dieselbe Szene unter unterschiedlichen der Beleuchtungsquelle hervorgerufenen Beleuchtungsbedingungen der Umgebung aktiviert werden und innerhalb eines n-Tupels aufgenommene Teilbilder in einer Datenverarbeitungsvorrichtung miteinander verarbeitet werden.

Hierdurch wird, anschaulich gesprochen, erreicht, dass innerhalb einer Frametime n Bilder erzeugt werden, die im Wesentlichen dieselbe Szene unter unterschiedlichen Beleuchtungsbedingungen darstellen und die zur weiteren Situationsbeurteilung pixelweise miteinander verarbeitet werden können. Dabei sind die jeweils miteinander zu verarbeitenden Pixel in unmittelbarer zeitlicher Nachbarschaft zueinander aufgenommen. Das minimiert Fehler, die dadurch entstehen, dass sich die aufgenommene Szene zwischen den Belichtungen der in den Teilbildern einander entsprechenden Pixel ändert. Als Konsequenz wird es möglich, mit dem erfindungsgemäßen Verfahren auch dynamische Vorgänge zu untersuchen, bei denen sich die Szenen innerhalb von zeitlichen Größenordnungen ändert, die nicht groß gegenüber der Frametime sind, wie dies bei den herkömmlichen Verfahren der Fall sein muss.

Ein nur scheinbarer Nachteil des erfindungsgemäßen Verfahrens besteht darin, dass die räumliche Auflösung der während einer Frametime aufgenommenen n Bilder gegenüber einem vollen Frame, d.h. einem Bild mit jeweils einem Pixel für jedes Sensorelement der Sensorfläche, reduziert ist. Jedes Sensorelement trägt nämlich nur zu einem der n Bilder bei. Außerdem werden die innerhalb einer Frametime entstehenden n Bilder der im Wesentlichen selben Szene zwar erfindungsgemäß mit minimalem zeitlichen Abstand aufgenommen. Da jedoch in jedem n-Tupel n räumlich unterschiedliche Teilmengen von Sensorelementen aktiviert werden, werden in den einander entsprechenden Pixeln der n Teilbilder eines n-Tupels geringfügig andere Punkte des Szene abgebildet.

Beide Probleme sind nur scheinbarer Natur, da in der Praxis die Auflösung handelsüblicher Sensorelemente die für die Messung erforderliche Auflösung weit übersteigt. Im Gegenteil ist für eine schnelle Bildverarbeitung oft eine künstliche Auflösungsreduzierung notwendig. Da die Aufnahmeoptik an die Erfordernisse der Messung anzupassen ist, also ebenfalls eine geringere Auflösung haben kann als die Sensorfläche, sind benachbarte Sensorelemente im Wesentlichen dem gleichen Lichteinfall ausgesetzt und können praktisch als Bildpunkte desselben Szenenpunktes betrachtet werden.

Bei einer besonders vorteilhaften Ausführungsform der Erfindung ist daher vorgesehen, dass innerhalb eines n-Tupels räumlich benachbarte Teilmengen von Sensorelementen aktiviert werden. Befinden sich die n innerhalb eines n-Tupels aktivierten Teilmengen von Sensorelementen nämlich in räumlicher Nachbarschaft, wird der räumliche Versatz minimiert, sodass die Unterschiede der miteinander zu verarbeitenden Pixel fast ausschließlich aus der unterschiedlichen Beleuchtung während des jeweiligen Aktivierungsintervalls resultieren.

Zwar ist es dabei grundsätzlich möglich, innerhalb eines n-Tupels mit n > 2 die räumlich benachbarten Teilmengen von Sensorelementen in einer zeitlichen Reihenfolge zu aktivieren, die nicht ihrer räumlichen Anordnung entspricht. Besonders vorteilhaft ist es jedoch, die räumlich benachbarten Teilmengen von Sensorelementen während zeitlich aufeinander folgender Aktivierungsintervalle zu aktivieren. Auf diese Weise wird sichergestellt, dass die einander entsprechenden Pixel der n Teilbilder minimalen räumlichen wie zeitlichen Abstand voneinander aufweisen.

Bei einer besonders bevorzugten Ausführungsform der vorliegenden Erfindung besteht die Sensorfläche aus einer in Zeilen und Spalten angeordneten Matrix von Sensorelementen. Dieser Sensortyp stellt die weitest verbreitete Sensorform dar und ist entsprechend kostengünstig. Auch die spätere Verarbeitung der mit einem solchen Sensor gewonnenen Daten ist besonders einfach, da sich die räumliche Position jedes Sensorelementes in einfacher Weise aus der Kombination der entsprechenden Zeile und Spalte ergibt.

Vorzugsweise entspricht die während eines Aktivierungsintervalls aktivierte Teilmenge von Sensorelementen einer kleinen ganzen Zahl von Zeilen oder Spalten der Matrix von Sensorelementen, besonders bevorzugt jedoch genau einer Zeile oder genau einer Spalte. Dies ermöglicht eine besonders gute zeitliche und räumliche Übereinstimmung der n Teilbilder eines n-Tupels.

Besonders vorteilhaft ist es, wenn alle Aktivierungsintervalle grundsätzlich die gleiche Dauer haben. Dies erleichtert die Ansteuerung der Sensorvorrichtung. Zumindest sollten die in den n-Tupeln einander bzgl. ihrer Beleuchtungsbedingungen entsprechenden Aktivierungsintervalle dieselbe Länge aufweisen. Innerhalb eines n-Tupels kann es jedoch sinnvoll sein, Aktivierungsintervalle mit unterschiedlichen Beleuchtungsbedingungen unterschiedlich lang zu gestalten.

Grundsätzlich gibt es drei Möglichkeiten die Verarbeitung der Teilbilder eines n-Tupels miteinander zeitlich zu gestalten. Einerseits kann die Verarbeitung derart erfolgen, dass zunächst jeweils aus denjenigen Teilbildern aller n-Tupel eines Rahmens, die bei einander entsprechenden Beleuchtungsbedingungen aufgenommenen wurden, n Bilder der Umgebung erzeugt und diese miteinander verarbeitet werden. Dies erfordert eine Zwischenspeicherung der n Bilder. Dieses Verfahren bietet sich insbesondere an, wenn mehrere Berechnungsschritte erfolgen sollen, die jeweils auf wenigstens eines der n Bilder zugreifen müssen. Andererseits ist es auch möglich eine Verarbeitung unmittelbar im Anschluss an die Aktivierung erfolgen zu lassen. Dabei müssen lediglich die aus einer oder wenigen Teilmengen von Sensorelementen ausgelesenen Daten temporär zwischengespeichert werden. Als Bild aufgebaut wird dann lediglich das Verarbeitungsergebnis, also das berechnete Bild. Dieses Verfahren bietet sich beispielsweise bei einfachen Berechnungen, wie einer pixelweisen Subtraktion im Fall n = 2 an. Schließlich ist es auch möglich, zunächst aus allen Teilbildern aller n-Tupel eines Rahmens ein Kombinationsbild der Umgebung zu erzeugen und dessen Pixel entsprechend ihrer Zuordnung zu den n-Tupeln miteinander verarbeitet werden. Diese Variante erfordert die geringsten Änderungen der Ansteuerung einer herkömmlichen Rolling-Shutter-Sensorvorrichtung.

Zur Erzielung eines minimierten zeitlichen wie räumlichen Versatzes der miteinander zu verarbeitenden Pixel bzw. Sensorelemente sowie aus Gründen der höheren Berechnungsgeschwindigkeit, des geringeren Speicherbedarf sowie des reduzierten Auflösungsverlustes wird Anwendungen, bei denen n = 2 ist, der Vorzug vor höheren n-Tupeln gegeben.

Bei vielen Anwendungen, wie etwa der Überwachung eines Fahrzeuginnenraumes ist es erwünscht, dass die Benutzer von der eingesetzten Vorrichtung möglichst wenig wahrnehmen. Es ist daher wünschenswert, eine Beleuchtungsquelle zu verwenden, die für den Menschen nicht sichtbare Strahlung aussendet. Eine besonders bevorzugte Ausführungsform der Erfindung zeichnet sich daher dadurch aus, dass die Beleuchtungsquelle Licht im Infrarot-Bereich aussendet.

Die Umsetzung des erfindungsgemäßen Verfahrens kann vorzugsweise durch geeignete Programmierung der Ansteuerung handelsüblicher Sensorvorrichtungen erfolgen, wobei je nach Bedarf auch Anpassungen der Hardware vorzunehmen und/oder weitere Komponenten vorzusehen sind.

Weitere Einzelheiten der Erfindung ergeben sich aus der nachstehenden, ausführlichen Beschreibung und den beigefügten Zeichnungen, in denen bevorzugte Ausführungsformen der Erfindung beispielsweise veranschaulicht sind.

In den Zeichnungen zeigen:
Figur 1: eine Prinzipskizze zur Veranschaulichung des erfindungsgemäßen Verfahrens,
Figur 2: eine Prinzipskizze zur Veranschaulichung eines Rolling Shutters nach dem Stand der Technik.

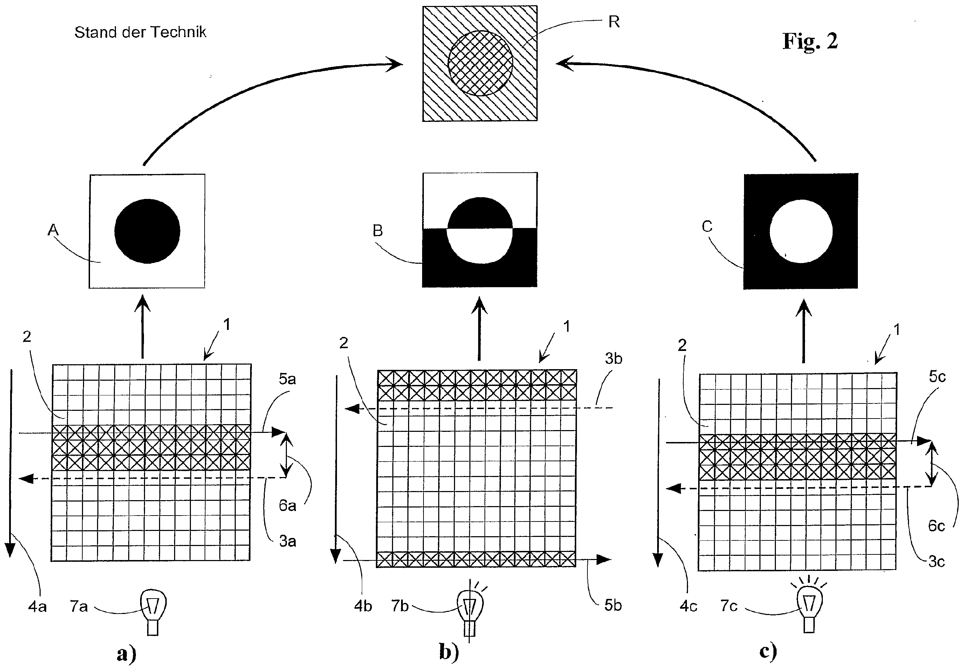

Fig. 2 zeigt eine Prinzipskizze, die ein Rolling Shutter nach dem Stand der Technik veranschaulichen soll. Der Übersichtlichkeit halber ist von einer Sensorvorrichtung lediglich die Sensorfläche 1 dargestellt, die aus einzelnen Sensorelementen 2 besteht, die matrixartig in Zeilen und Spalten angeordnet sind. Üblicherweise umfasst eine handelsübliche Sensorvorrichtung mehrere tausend Sensorelemente 2. Der Übersichtlichkeit halber wurde in Fig. 2 eine Sensorfläche 1 mit lediglich 13 x 13 Sensorelementen 2 dargestellt.

Die Teildarstellungen a), b) und c) in Fig. 2 zeigen symbolisch drei Stadien der Datenaufnahme in ihrer zeitlichen Reihenfolge während des Betriebs der Sensorvorrichtung.

Stadium a) stellt die Aufnahme eines ersten Vollbildes dar. Dazu wird eine Zeile von Sensorelementen zurückgesetzt (Reset) und dadurch für die Integration einfallenden Lichtes aktiviert. Die Reset-Funktion ist durch den gestrichelt dargestellten Pfeil 3a symbolisiert. Sensorelemente 2, die aktiviert sind und einfallendes Licht integrieren, z.B. indem sie freie Elektronen sammeln, die durch das einfallende Licht in dem Halbleitermaterial des Sensors erzeugen, sind symbolisch mit einem x gekennzeichnet. Nacheinander werden alle Zeilen der Sensorfläche 1 zurückgesetzt, was durch den Pfeil 4a angedeutet ist. Bildlich gesprochen bewegt sich die Reset-Zeile 3a über die gesamte Sensorfläche 2.

In einem Abstand von einigen Zeilen, im gezeigten Ausführungsbeispiel drei Zeilen, folgt eine Auslesezeile, d.h. die entsprechenden Sensorelemente 2 in dieser Zeile werden ausgelesen, digitalisiert und ihre entsprechenden Werte gespeichert. Die Auslesefunktion ist durch den Pfeil 5a symbolisiert. Der Doppelpfeil 6a, der den Abstand zwischen Reset 3a und Auslesen 5a markiert steht zugleich für die Belichtungszeit. Werden Reset- und Auslesezeile nämlich mit gleichbleibendem Abstand und gleichbleibender Verweilzeit an jeder Position in Richtung des Pfeils 4a über die Sensorfläche 1 bewegt, entspricht der räumliche Abstand zwischen Reset- und Auslesezeile auch dem zeitlichen Abstand während dessen die Sensorelemente 2 einfallendes Licht integrieren können.

Sind alle Zeilen ausgelesen und die Werte der Sensorelemente unter Wahrung ihrer räumlichen Anordnung gespeichert, liegt ein erstes Vollbild oder ein erster Frame A vor. Nachfolgende Frames B und C werden in gleicher Weise aufgenommen.

Stadium b) zeigt eine besondere Situation beim Übergang von der Aufnahme des ersten Frames A zum zweiten Frame B. Während eine noch zu Frame A gehörende Zeile ausgelesen wird (Pfeil 5b), sind bereits mehrere zu Frame B gehörige Zeilen (oberhalb der Reset-Zeile 3b) aktiviert und integrieren einfallendes Licht. Hierdurch wird zwar eine schnelle Bildfolge erreicht. Sollen jedoch aufeinander folgende Bilder bei unterschiedlichen Beleuchtungsbedingungen aufgenommen und später miteinander verarbeitet werden, ist diese fehlende Trennung zwischen den Frames nachteilig. Der Frame B nämlich, während dessen Aufnahme der Beleuchtungswechsel erfolgt, kann für Messzwecke nicht herangezogen werden und muss verworfen werden. Die Frametime für ein berechnetes Bild R, das sich aus einer Verarbeitung der eindeutig beleuchteten Frames A und C miteinander ergibt, entspricht daher der dreifachen Frametime für herkömmliche Aufnahmen (einfache Frametime), was für die meisten Messanforderungen erheblich zu lang ist, insbesondere, da der zeitliche Abstand zwischen zwei miteinander zu verarbeitenden Pixeln zwei einfache Frametimes beträgt. In Fig. 2 sind durch die ausgeschaltete Glühbirne 7a und die eingeschaltete Glühbirne 7c unterschiedliche Beleuchtungszustände symbolisch dargestellt. Die geteilte Glühbirne 7b symbolisiert einen Beleuchtungswechsel während der Aufnahme des Frames B. In der Praxis werden unterschiedliche Beleuchtungszustände z.B. dadurch realisiert, dass eine Beleuchtungsquelle zu vorgegebenen Zeiten, die mit der Taktung der Bildfolge gekoppelt sind, ein- und ausgeschaltet wird und die von der Aufnahmeoptik erfasste Umgebung zeitweise beleuchtet.

Der genannte Nachteil des großen zeitlichen Abstandes zwischen den miteinander zu verarbeitenden Frames A und C lässt sich durch Reduzierung der zu einer Zeit aktiven Teilmenge der Sensorelemente 2 auf eine einzige Zeile und damit durch eine Minimierung der Belichtungszeit nur graduell beheben. Eine Aufnahme des Überlappungsframes B ist dann nicht erforderlich. Die Frametime für ein berechnetes Bild R beträgt jedoch noch immer das Doppelte einer einfachen Frametime und der zeitliche Abstand der Aufnahmen zweier miteinander zu verarbeitender Pixel beträgt eine volle (einfache) Frametime.

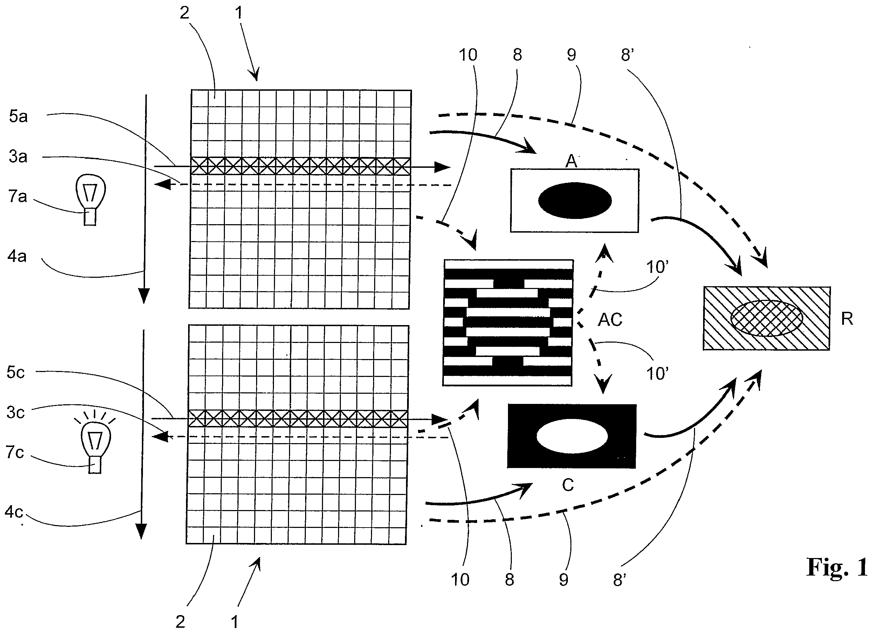

Fig. 1 stellt in analoger Symbolik eine bevorzugte Ausführungsform des erfindungsgemäßen Verfahrens dar, das eine Messbeobachtung auch schneller, dynamischer Prozesse unter Verwendung handelsüblicher Sensorvorrichtungen ermöglicht. Wie beim herkömmlichen Rolling Shutter werden Zeilen von Pixel durch einen Reset 3a, 3c aktiviert. Die entsprechenden Sensorelemente 2 integrieren einfallendes Licht bis zum Auslesevorgang 5a, 5c. Bei dem dargestellten Ausführungsbeispiel ist die zu einer Zeit aktive Teilmenge von Sensorelementen auf genau eine Zeile reduziert. Die hieraus resultierende, kurze Belichtungszeit stellt bei lichtstarken Anwendungen, wie sie z.B. in einem gut ausleuchtbaren Innenraum eines Kraftfahrzeugs vorliegen, keinen Nachteil dar.

Wie durch die Glühbirnen 7a und 7c symbolisiert, ist die Beleuchtungsquelle derart mit dem Zeilenvorschub synchronisiert, dass jeweils zwei nacheinander aktivierte Zeilen von Sensorelementen 2 Licht unter unterschiedlichen Beleuchtungsbedingungen integrieren. In der Praxis ist dies z.B. erreichbar, indem die Beleuchtungsquelle, z.B. eine Leuchtdiode oder ein Diodenlaser, die vorzugsweise im nahen IR-Bereich abstrahlen, mit dem vertikalen Zeilentrigger der Sensorvorrichtung getriggert wird. Die innerhalb eines solchen Doppels (2-Tupels) von aufeinander folgenden Aktivierungsintervallen ausgelesenen Pixel werden zum Aufbau zweier unterschiedlicher Teilbilder A und C verwendet. Die Teilbilder A und C haben daher eine halbierte vertikale Auflösung, wogegen die horizontale Auflösung unverändert bleibt. Die Teilbilder A und C repräsentieren im Wesentlichen dieselbe Szene unter unterschiedlichen Beleuchtungsbedingungen. Die Teilbilder A und C entstehen gemeinsam während nur einer einzigen (einfachen) Frametime, wobei einander bzgl. ihrer Position entsprechende Pixel mit einem zeitlichen Abstand von nur einer Zeile aufgenommen werden. Baute man die ausgelesenen Pixel gemäß ihrer Position auf der Sensorfläche 1 zu einem einzigen Vollbild AC zusammen, entspräche dies einem herkömmlichen Vollbild mit voller vertikaler Auflösung, dessen aufeinander folgende Zeilen jedoch unter unterschiedlichen Beleuchtungsbedingungen aufgenommen wurden, wie die in Fig. 1 symbolisch als Frame AC dargestellt ist.

Wie bereits erwähnt, stellt die Einbuße an vertikaler Auflösung keinen wesentlichen Nachteil dar, da die Zahl der Sensorelemente 2 handelsüblicher Sensorvorrichtungen die Erfordernisse der meisten Messanwendungen weit übersteigt. Eine geeignete Anpassung der Auflösung der Aufnahmeoptik kann überdies dafür sorgen, der räumliche Versatz um eine Zeile, der zwischen den einander entsprechenden Pixeln der Teilbilder A und C besteht, bei der weiteren Bildverarbeitung vernachlässigbar ist.

Neben dem Aufnahme- und Zuordnungsprinzip des erfindungsgemäßen Verfahrens, sind in Fig. 1 drei mögliche Varianten einer Bildverarbeitung im Anschluss an die Aufnahme beispielhaft und symbolisch dargestellt. Am anschaulichsten ist der mit den durchgezogenen Wegepfeilen 8, 8' markierte Bearbeitungsweg: Die innerhalb eines Doppels von Aktivierungsintervallen ausgelesenen Zeilen werden zum Aufbau unterschiedlicher Frames A und C verwendet, indem sie z.B. abwechselnd in unterschiedlichen Speicherbereichen einer Datenverarbeitungseinheit gespeichert werden, wie dies mit den Wegepfeilen 8 angedeutet ist. In einem nachfolgenden Berechnungsschritt werden die Frames A und C dann pixelweise miteinander verarbeitet, z.B. durch pixelweise Subtraktion, Bildung einer normierten Differenz oder Berechnung eines Verhältnisses der Pixelwerte, wobei jeweils die einander bzgl. ihrer Position entsprechenden Pixel der Frames A und C miteinander verrechnet werden, um zu einem Pixelwert zu führen, der, unter Wahrung der Position zum Aufbau des berechneten oder Ergebnis-Frames R beiträgt.

Günstiger kann es jedoch sein, auf den Aufbau der Frames A und C zu verzichten und die innerhalb eines Doppels von Aktivierungsintervallen ausgelesenen Zeilen unmittelbar miteinander zu verrechnen und direkt den Ergebnis-Frame R aufzubauen, wie dies mit den gestrichelten Wegepfeilen 9 symbolisiert wird. Diese Variante bietet sich insbesondere bei einfachen Berechnungen an, bei denen nicht mehrfach auf die ursprünglichen Daten der Frames A und C zurückgegriffen werden muss.

Schließlich ist es auch möglich, die ausgelesenen Pixelwerte ohne Berücksichtigung ihrer Zuordnung zu einem der Teilbilder A und C einfach gemäß ihrer Herkunftsposition auf der Sensorfläche in einem Kombinationsframe AC zu speichern (Wegepfeile 10) und erst im Anschluss in die Teilbilder A und C aufzuspalten (Wegepfeile 10') oder direkt zeilenweise miteinander zu bearbeiten (Wegepfeil 10"). Diese Variante ist vorteilhaft, weil sie die geringsten Änderungen an der Ansteuerung einer handelsüblichen Sensorvorrichtung erfordert.

Natürlich ist es auch möglich, Aktivierung und Auslesen in höheren n-Tupeln als Zweierpaaren durchzuführen. Dies eröffnet die Möglichkeit komplexerer Berechnungen unter Hinzuziehung von mehr als zwei unterschiedlichen Beleuchtungsbedingungen. Die dabei jeweils aktivierten Teilmengen müssen auch nicht notwendig einzelne Zeilen sein. Ebenso ist die Wahl von Spalten, Vielfachen von Zeilen bzw. Spalten oder gänzlich anderer Teilmengenformen möglich, wobei sich letzteres insbesondere bei Sensorvorrichtungen mit direkt ansteuerbaren Sensorelementen 2 anbietet.

Eine bevorzugte Anwendung des erfindungsgemäßen Verfahrens stellt die Überwachung eines Innenraums eines Kraftfahrzeuges dar. Dabei ist eine Digitalkamera auf CMOS-Basis an einer Stelle des zu überwachenden Innenraums installiert, die eine Aufnahmeoptik aufweist, die eine interessierende Umgebung auf die Sensorfläche der Kamera abbildet. Als interessierende Umgebungen kommen z.B. der gesamte Innenraum (etwa bei Diebstahlsicherungen) oder spezielle Bezugspunkte, deren Bewegung zu erfassen ist (etwa bei optischer Airbag-Steuerung) in Frage. Eine IR-Lichtquelle beleuchtet diese Umgebung wenigstens bereichsweise, wobei sie zeitlich mit z.B. dem Zeilenvorschubsignal der Kamera getriggert wird. Die Aufnahme und Verarbeitung von jeweils zwei oder mehr Bildern zur Erzeugung eines berechneten Bildes, das Grundlage eines automatischen Entscheidungsprozesses sein kann, kann z.B. erforderlich sein, wenn Störgrößen, wie etwa natürliche Sonnenstrahlung eliminiert werden sollen.

Selbstverständlich ist die vorliegende Erfindung nicht auf die gezeigten Ausführungsbeispiele beschränkt. Viele weitere, vorteilhafte Varianten sind innerhalb des von den Ansprüchen definierten Bereichs denkbar.

## Patentansprüche

1. Verfahren zum Betreiben einer räumlich auflösenden, optoelektronischen Sensorvorrichtung mit einer Sensorfläche, bestehend aus einer Mehrzahl lichtempfindlicher Sensorelemente, und mit einer Aufnahmeoptik, die eine räumliche Lichtverteilung in einer von ihr erfassten Umgebung auf die Sensorfläche abbildet, wobei jeweils eine Teilmenge von Sensorelementen für jeweils die Dauer eines zugeordneten Aktivierungsintervalls für die Integration einfallenden Lichtes zur Erzeugung eines entsprechenden Teilbildes der Umgebung aktiviert wird, und mit einer Beleuchtungsvorrichtung, die in zeitlichem Zusammenhang mit den Aktivierungsintervallen die von der Aufnahmeoptik erfasste Umgebung wenigstens zeit- und bereichsweise mit Licht eines von den Sensorelementen integrierbaren Wellenlängenbereichs beleuchtet, **dadurch gekennzeichnet, dass** zur Erzeugung eines berechneten Bildes (R) der Umgebung die Sensorfläche (1) gemäß dem Rolling-Shutter Prinzip innerhalb einer Frametime als Abfolge von n-Tupeln von Paaren aus Aktivierungsintervallen und zugeordneten Teilmengen von Sensorelementen (2) zur Erzeugung von n Teilbildern derart aktiviert wird, dass innerhalb eines n-Tupels jeweils n Teilmengen von Sensorelementen (2) während n Aktivierungsintervallen bein unterschiedlichen, durch entsprechende Ansteuerung der Beleuchtungsquelle (7a, 7c) hervorgerufenen Beleuchtungsbedingungen der Umgebung aktiviert werden und die innerhalb eines n-Tupels aufgenommenen Teilbilder in einer Datenverarbeitungsvorrichtung zur Erzeugung des berechneten Bildes miteinander verarbeitet werden.

2. Verfahren nach Anspruch 1, **dadurch gekennzeichnet, dass** innerhalb eines n-Tupels die räumlich benachbarten Teilmengen von Sensorelementen (2) während zeitlich aufeinander folgender Aktivierungsintervalle aktiviert werden.

3. Verfahren nach einem der vorangehenden Ansprüche, **dadurch gekennzeichnet, dass** die Sensorfläche (1) aus einer in Zeilen und Spalten angeordneten Matrix von Sensorelementen (2) besteht.

4. Verfahren nach Anspruch 3, **dadurch gekennzeichnet, dass** die während eines Aktivierungsintervalls aktivierte Teilmenge von Sensorelementen (2) einer kleinen ganzen Zahl von Zeilen oder Spalten oder genau einer Zeile oder Spalte der Matrix von Sensorelementen (2) entspricht.

5. Verfahren nach einem der vorangehenden Ansprüche, **dadurch gekennzeichnet, dass** die Verarbeitung der Teilbilder eines n-Tupels miteinander im Anschluss an die Aktivierung erfolgt.

6. Verfahren nach einem der Ansprüche 1 bis 4, **dadurch gekennzeichnet, dass** die Verarbeitung der Teilbilder eines n-Tupels miteinander derart erfolgt, dass zunächst jeweils aus denjenigen Teilbildern aller n-Tupeln eines Rahmens, die bei einander entsprechenden Beleuchtungsbedingungen aufgenommenen wurden, n Bilder der Umgebung erzeugt und diese miteinander verarbeitet werden.

7. Verfahren nach einem der Ansprüche 1 bis 4, **dadurch gekennzeichnet, dass** die Verarbeitung der Teilbilder eines n-Tupels miteinander derart erfolgt, dass zunächst aus allen Teilbildern aller n-Tupeln eines Rahmens ein Kombinationsbild der Umgebung erzeugt und dessen Pixel entsprechend ihrer Zuordnung zu den n-Tupeln miteinander verarbeitet werden.

8. Verfahren nach einem der vorangehenden Ansprüche, **dadurch gekennzeichnet, dass** die Verarbeitung der Teilbilder eine pixelweise Subtraktion, normierte Differenzbildung und/oder Verhältnisbildung der Teilbilder umfasst.

9. Verfahren nach einem der vorangehenden Ansprüche, **dadurch gekennzeichnet, dass** n = 2 ist.

10. Verfahren nach einem der vorangehenden Ansprüche, **dadurch gekennzeichnet, dass** die Beleuchtungsquelle Licht im Infrarot-Bereich aussendet.

11. Verfahren nach einem der vorangehenden Ansprüche, **dadurch gekennzeichnet, dass** die Sensorvorrichtung ein CMOS-Bildsensor ist.

## Claims

1. A method for operating a spatially resolving, optoelectronic sensor device having a sensor surface, comprising a plurality of light-sensitive sensor elements, and having a capturing optical system, which images a spatial light distribution in an environment scanned by said capturing optical system on the sensor surface, wherein subsets of sensor elements are activated in each case for the duration of an associated activation interval for the integration of incident light in order to produce a corresponding partial image of the environment, and having a lighting device, which, in temporal correlation with the activation intervals, lights up the environment scanned by the capturing optical system, at least temporarily and in specific regions using light of a wavelength range that can be integrated by the sensor elements, **characterised in that,** in order to produce a computed image (R) of the environment, the sensor surface (1) is activated in accordance with the rolling shutter principle within a frame time as a sequence of n-tuples of pairs of activation intervals and associated subsets of sensor elements (2) for producing n partial images, in such a way that, within each n-tuple, n subsets of sensor elements (2) are activated during n activation intervals with n different lighting conditions of the environment brought about by corresponding activation of the lighting source (7a, 7c) and the partial images recorded within an n-tuple are processed with one another in a data processing device in order to produce the computed image.

2. A method according to claim 1, **characterised in that,** within an n-tuple, the spatially adjacent subsets of sensor elements (2) are activated during temporally successive activation intervals.

3. A method according to either one of the preceding claims, **characterised in that** the sensor surface (1) comprises a matrix of sensor elements (2) arranged in rows and columns.

4. A method according to claim 3, **characterised in that** the subset of sensor elements (2) activated during an activation interval corresponds to a small integer of rows or columns or precisely one row or column of the matrix of sensor elements (2).

5. A method according to any one of the preceding claims, **characterised in that** the partial images of an n-tuple are processed with one another subsequently to the activation.

6. A method according to any one of claims 1 to 4, **characterised in that** the partial images of an n-tuple are processed with one another in such a way that, firstly, n images of the environment are produced from those partial images of all n-tuples of a frame that have been recorded with correlating lighting conditions, and said n images are processed with one another.

7. A method according to any one of claims 1 to 4, **characterised in that** the partial images of an n-tuple are processed with one another in such a way that, firstly, a combination image of the environment is produced from all sub-images of all n-tuples of a frame, and the pixels of said combination image are processed with one another in accordance with their association with the n-tuples.

8. A method according to any one of the preceding claims, **characterised in that** the processing of the partial images comprises a pixel-by-pixel subtraction, normalised difference formation and/or ratio formation of the partial images.

9. A method according to any one of the preceding claims, **characterised in that** n = 2.

10. A method according to any one of the preceding claims, **characterised in that** the lighting source emits light in the infrared range.

11. A method according to any one of the preceding claims, **characterised in that** the sensor device is a CMOS image sensor.

## Revendications

1. Procédé permettant de faire fonctionner un dispositif de capteur optoélectronique à résolution spatiale comprenant une surface de capteur constituée d'un ensemble d'éléments de capteur sensibles à la lumière, ainsi qu'une optique de prise de vue qui représente sur la surface de capteur une répartition spatiale de la lumière dans un environnement détecté par celle-ci, une quantité partielle d'éléments de capteur étant respectivement activée pendant la durée respective d'un intervalle d'activation associé pour permettre l'intégration de la lumière incidente pour obtenir une image partielle correspondante de l'environnement et un dispositif d'éclairage qui éclaire, au moins temporairement et par zones avec de la lumière d'une plage de longueurs d'onde pouvant être intégrée par les éléments de capteurs en fonction des intervalles d'activation, l'environnement détecté par l'optique de prise en vue,
**caractérisé en ce que**
pour permettre d'obtenir une image calculée (R) de l'environnement, la surface de capteur (1) est activée, selon le principe d'une obturation à mouvement continu, dans un temps de trame constitué par une succession de n points formés par des paires d'intervalles d'activation et de quantités partielles d'éléments de capteurs (2) associées pour permettre d'obtenir n images partielles, de sorte que, pour un point n, n quantités partielles d'éléments de capteur (2) soient respectivement activées pendant n intervalles d'activation avec n conditions d'éclairage différentes de l'environnement provoquées par commande correspondante des sources d'éclairage (7a, 7c), et les images partielles prises pour un point n sont traitées conjointement dans un dispositif de traitement de données pour obtenir l'image calculée.

2. Procédé conforme à la revendication 1,
**caractérisé en ce que**
pour un point n, les quantités partielles voisines dans l'espace d'éléments de capteur (2) sont activées pendant des intervalles d'activation successifs.

3. Procédé conforme à l'une des revendications précédentes,
**caractérisé en ce que**
la surface de capteur (1) est constituée par une matrice d'éléments de capteur (2) répartis en lignes et en colonnes.

4. Procédé conforme à la revendication 3,
**caractérisé en ce que**
la quantité partielle d'éléments de capteur (2) activée pendant un intervalle d'activation correspond à un petit nombre entier de lignes ou de colonnes ou à exactement une ligne ou une colonne de la matrice d'éléments de capteur (2).

5. Procédé conforme à l'une des revendications précédentes,
**caractérisé en ce que**
le traitement conjoint des images partielles d'un point n s'effectue après l'activation.

6. Procédé conforme à l'une des revendications 1 à 4,
**caractérisé en ce que**
le traitement conjoint des images partielles d'un point n s'effectue de sorte qu'à partir des images partielles, de tous les n points d'une trame, qui ont été respectivement prises dans des conditions d'éclairage correspondantes, n images de l'environnement soient tout d'abord obtenues et que celles-ci soient traitées les unes avec les autres.

7. Procédé conforme à l'une des revendications 1 à 4,
**caractérisé en ce que**
le traitement conjoint des images partielles d'un point n s'effectue de sorte qu'à partir de toutes les images partielles de tous les n points d'une trame, une image combinée de l'environnement soit tout d'abord obtenue, et que ses pixels soient traités conjointement selon leur association avec les n points.

8. Procédé conforme à l'une des revendications précédentes,
**caractérisé en ce que**
le traitement des images partielles comporte une soustraction par pixels, la formation d'une différence normalisée et/ou la formation d'un rapport des images partielles.

9. Procédé conforme à l'une des revendications précédentes,
**caractérisé en ce que**
n est égal à 2.

10. Procédé conforme à l'une des revendications précédentes,
**caractérisé en ce que**
la source d'éclairage émet de la lumière dans le domaine infrarouge.

11. Procédé conforme à l'une des revendications précédentes,
**caractérisé en ce que**
le dispositif de capteur est un capteur d'image CMOS.
